# EUROPEAN PATENT SPECIFICATION

(11) **EP 4 065 502 B1**
(45) Date of publication and mention of the grant of the patent: **01.01.2025**
(21) Application number: 20892947.1
(22) Date of filing: 25.11.2020
(51) Int. Cl.: B66C 6/00, B66C 19/00, E01D 1/00, E01D 2/00, E01D 12/00, E01D 18/00, E01D 19/00, E04B 1/08, E04B 1/24, E04B 1/342, E04C 3/04, E04G 11/54, F16S 3/00, B66C 17/00, E04C 3/06

(54) **MAIN GIRDER OF BRIDGE CRANE**
HAUPTTRÄGER EINES BRÜCKENKRANES
POUTRE PRINCIPALE DE PONT ROULANT

(30) Priority: 26.11.2019 FI 20196016
(43) Date of publication of application: 05.10.2022
(73) Proprietor: Konecranes Global Corporation, 05830 Hyvinkää (FI)
(72) Inventor: PEIPPO, Juha, 05830 Hyvinkää (FI); KONTIO, Antti, 05830 Hyvinkää (FI)
(74) Representative: Kolster Oy Ab
(86) International application number: PCT/FI2020/050795
(87) International publication number: WO 2021/105562

(56) References cited:
- WO-A1-2012/148260
- WO-A1-2012/148260
- CH-A- 416 009
- DE-A1- 2 556 246
- DE-A1- 2 556 246
- FR-A1- 2 195 759
- GB-A- 1 068 184
- GB-A- 1 068 184
- JP-U- S49 127 959
- US-A- 3 294 252
- US-A- 3 404 640
- US-A- 3 404 640
- US-A- 6 082 562

## Description

### Background of the invention

The invention relates to a horizontal main girder of a bridge crane, intended to be supported by its ends to end girders of the crane and comprising an elongated box-type central web.

There are several different methods to modify the main girder of a bridge crane in its end area. The need for the various types of end supports in such a case arises from different requirements of a drive guide of the crane. The most common ways to achieve a support for an end of the main girder is a so-called "Top Connection", in which the main girder is supported over its entire height on the end support, and a so-called "Top Medium Connection", in which only a part of the height of the main girder is on an end support. With the latter solution, the main girder can fit in cramped spaces and with different kinds of "lateral diversions" additional space can be created for e.g. pipes, electrical wires etc. in the end area in the vicinity of the crane track. In addition, a "Side Connection" support is used, in which the main girder is supported to a side of an end support.

Typical prior art "Top Medium Connection" solutions include various vertical narrowings and stiffening joints at the ends of the main girder. The making of the joints in such a case is laborious. Placing different kinds of joining plates is time consuming at the manufacturing stage because some of the plates are provided with bevels, the joint may include a plurality of stiffener plates, and many of the plates are of different sizes. Some welds may be in challenging locations from the viewpoint of manufacturing. Each joint must be separately designed to meet the strength-technical requirements. Modifying dimensions according to the required space causes the need to re-design the joint in question every time in relation to the thickness, angles, and dimensions of the plates to be used. There is no one joint type which would allow a plurality of needs to be fulfilled as concerns height and lateral diversion. Currently all these parameters must be selected according to the application and need in question. For example, US6082562A discloses a bridge crane according to the preamble of claim 1, with a slidable main girder in relation to the end carriages. CH416009A and FR2195759A1 disclose an overhead crane with box-shaped main girder. JPS49127959U discloses a main girder with a gusset plate.

### Summary of the invention

It is an object of the invention to eliminate the aforementioned drawbacks and problems when implementing the support onto an end of the main girder. This object is achieved by means of the inventive main girder which is characterised in that there is, formed in web plates of a central web on at least one end of the main girder, a cutting slot running substantially in the longitudinal direction of the main girder, and connected to this cutting slot there is a knife plate which extends in a horizontal plane from a bottom of the cutting slot substantially to the end of the main girder, for supporting to an end girder.

When the main girder is typically supported on an end girder, the bottom side of the knife plate is additionally substantially free from the central web over a specific length from an end surface of the main girder for said support.

Preferred embodiments of the invention are disclosed in the dependent claims.

The solution according to the invention is adaptable bot in the vertical direction and lateral diversions on a wide area. This makes it possible to meet the requirements in each case as well as possible, and to offer better solutions than previously. A big advantage of the present invention also lies in that both the final form of an end of the central web, or the plates used for the central web, and the cutting slot made in them may be cut without any intermediate steps with the same plasma, laser, or water cut in one go. It is possible to set specific threshold values for the structure both for the height and lateral diversions, within which the structure may freely change without the need to carry out strength calculations each time separately. The solution allows the manufacture of asymmetrical main girders without the need to compromise on adequate strength or the delivery leadtime.

An end of the main girder is as easy as possible to manufacture, because all the required parts may be advantageously welded in place from the outside of the central web, and the welder's working position is good for each weld they are making. The welder need not inhale welding gases related to internal welding. The welds are easy to access for the welder and inspector. The solution put forth is advantageous for both manual and automated welding. The joints come out as fillet joints, whereby there is no need for welds requiring penetration. In the optimal performance area of the form of the end, the welds are formed with one bead, making manufacture faster.

The invention allows shifting the forces resulting from hoisting a load and the weight of the crane itself between the main girder's end and the critical transfer zone which is over a length of approximately one or two metres from the end towards the centre part of the main girder.

### List of figures

In the following, the invention will be explained in greater detail in connection with the preferred embodiments and with reference to the attached drawing, in which:
Figure 1 is a top view of a simplified bridge crane;
Figure 2 is a side view of the bridge crane of Figure 1, the bridge crane having symmetrical ends of the main girder;
Figure 3 is a side view of an end of the inventive main girder of the bridge crane, where the end is supported on the main girder;
Figures 4a to 4d show inventive main girder ends of different shapes, where the end is supported on the main girder;
Figure 5 is a side view of an end of the inventive main girder of the bridge crane, where the end is supported to a side of the main girder;
Figure 6 shows a partial horizontal cross section from above the knife plate at the main girder ends according to the preceding figures;
Figure 7 is a top view of the basic shape of the knife plate; and
Figures 8a and 8b show transverse internal intermediate plates of an end of the main girder.

### Detailed description of the invention

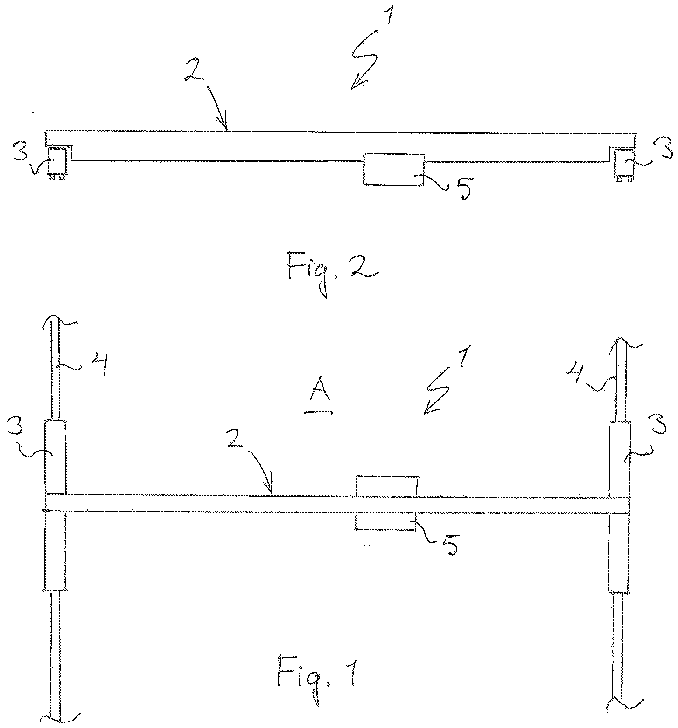

With reference at first to Figures 1 and 2, the main components of a bridge crane 1 are a horizontal main girder 2; end girders 3, transverse in relation to the main girder 2, to which the main girder 2 is supported at both of its ends; rails 4 at the sides of a crane space A, along which the end girders 3 run supported by their wheels (not shown); and a trolley 5 moving along the main girder 2, with its hoisting apparatus (not shown). The crane space A next to and around the rails 4 is often limited, and the present invention solves the problems caused by this space restriction. There may be several main girders 2 in parallel, whereby a trolley 5 may be supported by several main girders 2.

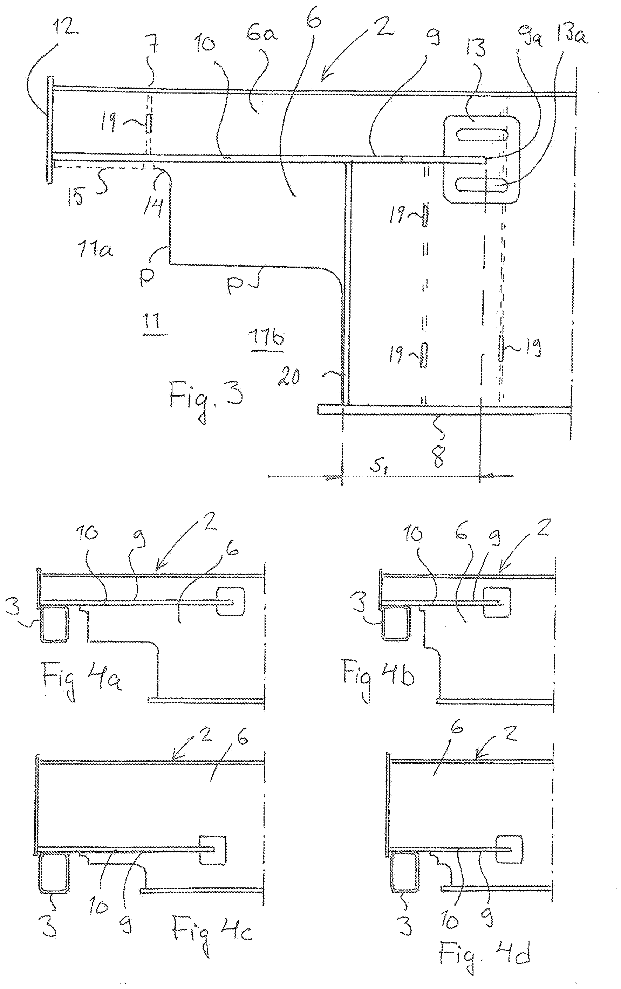

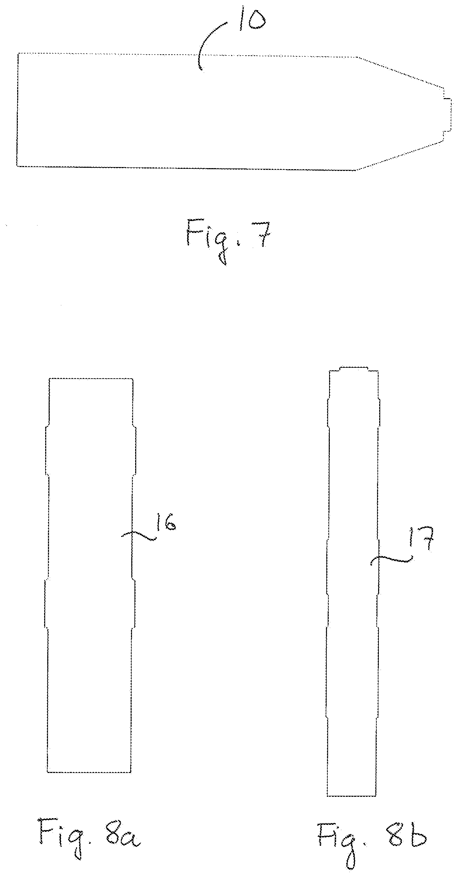

Referring in addition to Figure 3, the main girder 2 comprises in this inventive structure an elongated box-type central web 6, and typically, an elongated top flange 7 or top plate on its top surface, and an elongated bottom flange 8 on the bottom surface, supported to which bottom flange 8 the trolley 5 of this example runs on the main girder 2. The trolley 5 could also be supported to the top flange 7. In both cases, it could also be supported to the side surfaces of the central web 6. Web plates 6A of the central web 6 are interconnected with the intermediate plates 16 and 17, shown in Figures 8a and 8b, which can be welded from the outside through intermittent openings 19 reserved for the purpose. The intermediate plates 16, 17 have outward projecting projections which are adapted in the openings 19 in connection with combining the central webs 6, and the projections are welded in the openings 19 from outside the main girder. In the same way, the spacer plates 16, 17 may be advantageously welded to the top flange 7 by means of the tongues.

Formed on both ends of the central web 6, in other words the main girder 2, there is a cutting slot 9 running horizontally in the longitudinal direction of the main girder 2, and connected to this cutting slot 9 there is a knife plate 10 which extends from a bottom 9a of the cutting slot 9 to the end of the main girder 2 for supporting to the end girder 3 whereby the bottom side of the knife plate 10 is free from the central web 6 over a specific length from an end surface of the main girder 2 for said support.

Starting from the end surface of the main girder 2 over a specific length, on the bottom side of the knife plate 10, a part of the central web 6 has been cut off with a side profile P of a specific shape to form a space 11 for ventilation ducts, cable shelves, power supply rail of the crane, etc.

The height for the portion 6a of the central web 6 over the space 11, and therefore knife plate 10, is selected depending on the maximum weight to be placed on the main girder 2. The minimum height of the portion 6a may typically be approximately 1/5 of the total height of the central web 6, such as 150 mm. This ensures that the shearing stress caused by the weight of the main girder 2 and trolley 5, as well as the load to be hoisted, may be managed, and that there is room to attach the knife plate 10.

If the space 11 is "two-piece", as shown in Figure 3, and has a space 11a extending to the bottom surface of the knife plate 10, and a space 11b in which the central web 6 extends to the selected depth below the knife plate 10, the minimum height of the central web 6 at this place depends on the length of the space 11b in the main girder's 2 direction when the space 11 is typically only of the width required by the support to the end girder 3. When the areas 11a, 11b are mainly rectangular, it is simple to give design instructions for them as well as the allowed main dimensions for the joining areas for various loading situations. Programming mainly rectangular shapes in sheet work to manufacture sheets is also simple. The position in the height direction of the knife plate 10 in the central web 6 as well as the shape and size of the space 11 therefore entirely depend on the loading and application of the bridge crane 1 and may greatly vary, the essential matter being the cutting slot 9 and the knife plate 10 therein, the positioning of the succeeding intermediate plates 16, 17, and the reinforcement plate 13 at the end of the knife plate 10. In Figure 3, touching the space 11b on the right, a substantially vertical closing plate 20 is adapted between the web plates 6A, which at the bottom borders on the bottom flange 8 and on the knife plate 10 at the top. This closing plate 20 is welded from the space 11b side with a uniform weld, from left to right in Figure 3, so that the weld forms the letter U. The bottom edge is placed on the bottom flange 8, the vertical portions on the inner surfaces of the web plates 6A, as high as welding allows. The end plate 12 and closing plate 20 close the end area of the main girder 2, but perfect sealing is not necessary achieved. The volume defined by the spaces 11a, 11b, knife plate 10, and closing plate 20 in the structure is advantageously open at the bottom. The rightangled outer edge of the central web 6, shown at the junction of the spaces 11a, 11b, and the inner edge defined by the radius of curvature at the edge of the space 11b may naturally be formed in various ways. The essential matter in the dimensioning of the main girder 2 is to manage the total deflection of the main girder 2 within the allowed limits.

A support plate 15 may be advantageously connected to the free bottom surface of the knife plate 10, for supporting to the end girder 3.

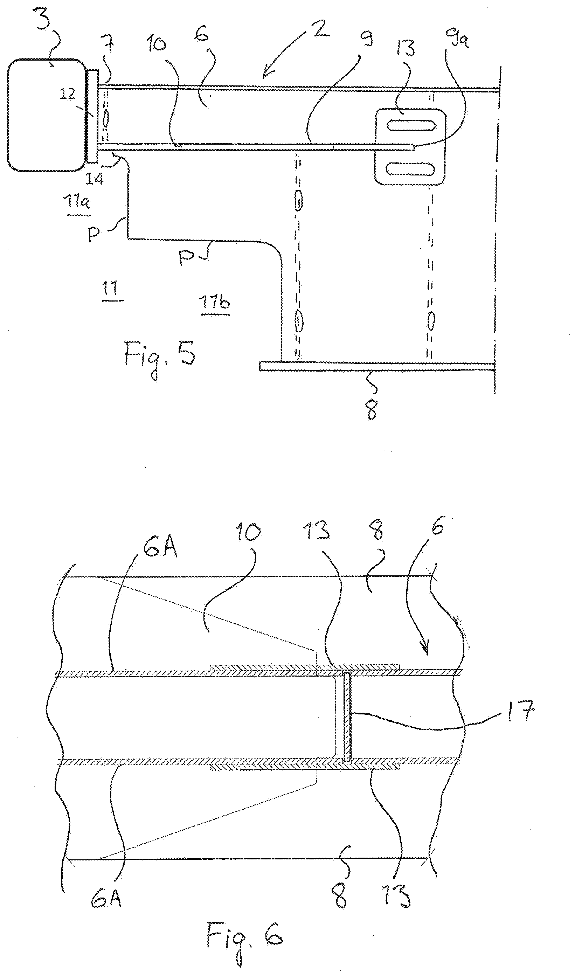

In the example described, an end plate 12 is fixed to the end surface of the main girder 2 and the end of the knife plate 10, and a stress-distributing reinforcement plate 13 is fixed on both sides of the central web 6 in the area on the side of the bottom 9a of the cutting slot 9, the reinforcement plate extending on a specified area on the front, rear, top and bottom side of the bottom 9a of the cutting slot 9. This reinforcement plate 13 is used to ease up the stress concentration at the end of the knife plate 10, and possibly likewise the surrounding stress concentrations around the openings and gaps. The material thickness of the reinforcement plate 13 is advantageously the same as the material thickness of the web plates 6A. The reinforcement plate 13 is advantageously a square or rectangle, and it has longitudinal through-openings 13a made in it. These openings 13a are advantageously placed horizontally in the assembly, that is, in the direction of the length of the main girder 2. The dimensioning for the openings 13a is so chosen that a fillet weld may be made at the top edge and bottom edge of the opening 13a, also horizontally, when the reinforcement plate 13 is placed on the central web 6. There is need to weld the outer edges of the reinforcement plate 13. The weld slightly resembles a plug weld which is expanded for the dimension of the elongated opening 13a in the main girder 2 direction, but differs from a plug weld in that two parallel fillet welds are enough, and the entire open space of the opening need not be filled with a weld. The goal is to make welding and placing a welding tool easier, so that the top flange 7 is not on the extension of the welding tool or hand. The bottom edge of the end plate 12 is advantageously extended downwards, whereby an edge support can be formed to support the support plate 15 laterally. When a sliding joint as the one described in the patent application PCT/FI2019/050298 is used, the movement range and/or twisting of the joint in question may also be restricted by supporting or restricting from the lateral direction with a clearance by means of the downward extended end plate 12. In a sliding joint, the potential falling of the main girder 2 from the end girder 3 is also prevented by means of the end plate 12. The main task of the end plate 12 is to block the box structure of the main girder and to stiffen the structure to some extend at this location. The end plate 12 is more important below in the "Side Connection" solution, to be described below in Figure 5, in which forces are brought through it from the main girder 2 to a flank of the end girder 3. The support plate 15 is advantageously a rectangular plate that has free holes for a bolt connection between the end girder 3 and knife plate 10. Different options exist for fastening the support plate 15: a bolt joint, weld joint, and a sliding joint made with bolts. Between the main girder 2 and end girder 3, on at least one end, there is a sliding joint to restrain the movements and stresses of the bridge crane.

The fastenings of the knife plate 10, end plate 12, and reinforcement plate 13 are most advantageously done by welding. The knife plate 10 is advantageously welded on its entire length to the central web 6, so on the top and bottom sides. The reinforcement plate 13 is placed on the welded knife plate 10 and welded in place by making horizontal fillet welds, for example 2+2 pcs. on the edges of the open slots 13a, and the point of the knife plate 10 end and reinforcement plate 13 is welded with a filled weld.

In addition, advantageously formed in the web portion below the knife plate 10, there is a projection 14 in contact with the bottom surface of the knife plate 10 and extending towards the end surface of the main girder 2. This projection 14 bears significance from the viewpoint of the service life of the joint of the knife plate 10, because this projection 14 reduces the stress concentration at the joint edges and prolongs the lifespan of this detail. The height of the projection 14 may be set to constant, but so that it nevertheless has a minimum dimension. By setting a minimum, the goal is to ensure that at least some of the projection 14 is left even when the welding heat seeks to melt the projection on the edge. Below the projection 14, there is a notch rounded with a 90 degree arch length, in which a standard radius of curvature may advantageously be used, even though the end area is often designed differently in relation to the need of the space 11.

When the knife plate 10 and bottom flange 8 are substantially of the same thickness, the knife plate 10 acts, in a manner of speaking, as an extension of the bottom flange 8 in the area of the portion, i.e. space 11, cut off the central web 6 from below the knife plate 10, and on an area even longer, taking loads on the main girder 2 to its end. From the viewpoint of shifting loads, it is possible to set a dimension s1 for the longitudinal overlap in the length direction of the main girder 2, which dimension s1 is restricted on the one hand by the joint to the central web 6 of the tip flank seen on the outside of the trapezium of the knife plate 10 at the reinforcement plate 13, and on the other hand the joint between the central web 6 and bottom flange 8, at the outermost point closer to the end on the end girder 3 side. The overlap dimension s1 may be 200 to 1000 mm. The knife plate 10 is advantageously cut off a thicker plate than the web plates 6A or reinforcement plates 13 whereby the knife plate 10 edges may remain uneven or differ from a right angle in relation to the plane surface (top of bottom surface). In this case, it is advantageous that complex forms are not made on the knife plate 10 edges, or that there is no need to connect precisely to these edges. It is wellfounded in this case to connect the knife plate 10 by its straight plane surfaces, so top of bottom surface, as shown in Figure 3, for example. Similarly, the possible slots are more preferably made in thin plates, such as the central web 6 and reinforcement plates 13.

When the inventive cutting slot - knife plate structure 9, 10 is at both ends of the main girder 2, these structures 9, 10 do not have to be identical but they can be made according to the requirements and application of the customer. If there are several main girders side-by-side, such as two main girders to support the trolley 5, as many as 4 different ends of the main girder may be formed, if so required.

Figures 4a to 4b show, by way of example, what kind of different shapes for the ends of the main girder 2 are implementable with the present invention. The connecting area of the main girder 2 need not be alike at both ends of the main girder. The area 11b in Figure 3 may be separately modified for both connection areas of the main girder 2 according to the space needs of the customer. It may be considered worth pursuing that the height of the support for the end girders 3 is the same at both ends of the main girder 2 so that the main girder 2 is not tilted. In some cases, the main girder 2 of a bridge crane, gantry crane, or semi-gantry crane is adapted to move on rails 4 that are at two different height positions. Even in such a case, the main girder 2 or part thereof is substantially horizontal.

The knife plate 10 is advantageously a rectangle which is narrowed at its end into the shape of a trapezium. The width of the knife plate 10 on the portion of its rectangle is advantageously 2 to 4 times the distance between the web plates 6A. The knife plate 10 is advantageously not wider than the width of the bottom flange 8. The thin tip of the trapezium may be substantially the same as the distance between the web plates 6A of the central web 6. The tip may show a projection protruding forward on the front side of the tip, the width of which substantially corresponds with the width between the inner surfaces of the web plates 6A. This projection makes the assembly of the web plates 6A easier at the manufacture. As an alternative embodiment for the knife plate 10, instead of the trapezium tip there may be a fork-type tip in which the branches of the fork become gentler within the main girder 2, and the local stress peak on the flanks of the web plates 6A can be evened out over the corresponding joint length. The fork may be shaped as a parabola, for example, in which the parabola opens towards the centre part of the main girder 2. In this embodiment, the reinforcement plates 13 may in an advantageous case be left out. On the other hand, the projection at the tip of the trapezium cannot be utilised in the assembly. The knife plate 10 is advantageously a plate-like material which is of similar material within the main girder 2 and internally connects the joints of the cutting slots 9 made in the central web 6 and the knife plate 10. Due to the structure, the knife plate 10 may support the central webs 6 from the inside and transfer forces between the central webs 6.

As shown in Figure 5, the main girder 3 according to the invention may be alternatively connected to the side of the end plate 12, forming the so-called "Side Connection" fastening. In such a case, the end plate 12 is selected from a stronger material thickness than in the "Top Medium" fastening described first, and the end plate 12 is also wider (i.e. longer in the direction of the end girder 3) to form bolt joints between the end plate 12 and end girder 3. In this "Side Connection" fastening, the space 11 may potentially be smaller than in the "Top Medium" fastening, because the end surface of the main girder 2 in the longitudinal direction of the main girder 2 faces away from the end girder 3 by the width of the end girder 3 as compared to the "Top Medium" fastening.

The above description of the invention is only intended to illustrate the basic idea of the invention. A person skilled in the art may, however, implement its details within the scope of the attached claims.

## Claims

1. A main girder (2) of a bridge crane, intended to be supported by its ends to end girders (3) of the bridge crane (1) and which comprises an elongated box-type central web (6) having vertical web plates (6A), **characterised in that** there is, formed in the web plates (6A) of the central web (6) on at least one end of the main girder (2), a cutting slot (9) running substantially in the longitudinal direction of the main girder (2), and connected to this cutting slot (9) there is a knife plate (10) which extends in a horizontal plane from a bottom (9a) of the cutting slot (9) substantially to the end of the main girder (2), for supporting to the end girder (3).

2. A main girder as claimed in claim 1, **characterised in that** starting from the end surface of the main girder (2) over a specific length, on the bottom side of the knife plate (10), a part of the central web (6) has been cut off with a side profile (P) of a specific shape to form a space (11) for ventilation ducts, cable shelves, power supply rail of the crane, etc.

3. A main girder as claimed in claim 1 or 2, **characterised in that** the bottom side of the knife plate (10) is substantially free from the central web (6) over a specific length from an end surface of the main girder (2), for supporting to the end girder (2).

4. A main girder as claimed in claim 3, **characterised in that** a support plate (15) is fixed to the free bottom surface of the knife plate (10), for supporting to the end girder (3).

5. A main girder as claimed in any one of the preceding claims, **char-acterised** in that an end plate (12) is attached to the end surface of the main girder (2) and the end of the knife plate (10).

6. A main girder as claimed in claim 1 or 2, **characterised in that** attached to the end surface of the main girder (2) and the end of the knife plate (10) there is attached an end plate (12) from which the end of the main girder (2) is intended to be supported to the end girder (3).

7. A main girder as claimed in any one of the preceding claims, **char-acterised** in that a stress-distributing reinforcement plate (13) is fixed on both sides of the central web (6) in the area on the side of the bottom (9a) of the cutting slot (9), the reinforcement plate extending on a specified area on the front, rear, top and bottom side of the bottom (9a) of the cutting slot (9).

8. A main girder as claimed in any one of the preceding claims, **char-acterised** in that formed in the web portion below the knife plate (10), there is a projection (14) in contact with the bottom surface of the knife plate (10) and extending towards the end surface of the main girder (2).

9. A main girder as claimed in any one of the preceding claims, **char-acterised** in that the fastenings of the knife plate (10), end plate (12), and reinforcement plate (13) are done by welding.

10. A main girder as claimed in any one of the preceding claims, **char-acterised** in that an elongated top flange (7) or top plate is arranged in the top part of the central web (6), and an elongated bottom flange (8) is arranged in the bottom part of the central web (6).

11. A main girder as claimed in claim 10, **characterised in that** the knife plate (10) and lower flange (8) are substantially equally thick.

12. A main girder as claimed in any one of the preceding claims, **char-acterised** in that a cutting slot (9) and a knife plate (10) are arranged at both ends of the main girder (2).

## Patentansprüche

1. Hauptträger (2) eines Brückenkrans, der an seinen Enden durch Endträger (3) des Brückenkrans (1) gestützt werden soll und der einen länglichen kastenförmigen zentralen Steg (6) mit vertikalen Stegplatten (6A) umfasst, **dadurch gekennzeichnet, dass** in den Stegplatten (6A) des zentralen Stegs (6) an mindestens einem Ende des Hauptträgers (2) ein Schneideschlitz (9) gebildet ist, der im Wesentlichen in der Längsrichtung des Hauptträgers (2) verläuft, und mit diesem Schneideschlitz (9) eine Messerplatte (10) verbunden ist, die sich zum Stützen der Endträger (3) in einer horizontalen Ebene von einem Boden (9a) des Schneideschlitzes (9) im Wesentlichen zum Ende des Hauptträgers (2) erstreckt.

2. Hauptträger nach Anspruch 1, **dadurch gekennzeichnet, dass**, beginnend an der Endfläche des Hauptträgers (2) über eine spezifische Länge auf der Unterseite der Messerplatte (10) ein Teil des zentralen Stegs (6) mit einem Seitenprofil (P) einer spezifischen Form abgeschnitten wurde, um einen Raum (11) für Lüftungskanäle, Kabelroste, eine Stromversorgungsschiene des Krans usw. zu bilden.

3. Hauptträger nach Anspruch 1 oder 2, **dadurch gekennzeichnet, dass** die Unterseite der Messerplatte (10) zum Stützen der Endträger (2) über eine spezifische Länge von einer Endfläche des Hauptträgers (2) im Wesentlichen frei vom zentralen Steg (6) ist.

4. Hauptträger nach Anspruch 3, **dadurch gekennzeichnet, dass** zum Stützen der Endträger (3) auf der freien Bodenfläche der Messerplatte (10) eine Stützplatte (15) angebracht ist.

5. Hauptträger nach einem der vorhergehenden Ansprüche, **dadurch gekennzeichnet, dass** an der Endfläche des Hauptträgers (2) und am Ende der Messerplatte (10) eine Endplatte (12) befestigt ist.

6. Hauptträger nach Anspruch 1 oder 2, **dadurch gekennzeichnet, dass** an der Endfläche des Hauptträgers (2) und am Ende der Messerplatte (10) eine Endplatte (12) befestigt ist, von der das Ende des Hauptträgers (2) durch die Endträger (3) gestützt werden soll.

7. Hauptträger nach einem der vorhergehenden Ansprüche, **dadurch gekennzeichnet, dass** auf beiden Seiten des zentralen Stegs (6) im Bereich auf der Seite des Bodens (9a) des Schneideschlitzes (9) eine beanspruchungsverteilende Verstärkungsplatte (13) angebracht ist, wobei sich die Verstärkungsplatte in einem spezifizierten Bereich auf der vorderen, der hinteren, der oberen und der unteren Seite des Bodens (9a) des Schneideschlitzes (9) erstreckt.

8. Hauptträger nach einem der vorhergehenden Ansprüche, **dadurch gekennzeichnet, dass** im Stegabschnitt unter der Messerplatte (10) ein Vorsprung (14) gebildet ist, der mit der Bodenfläche der Messerplatte (10) in Kontakt ist und sich zur Endfläche des Hauptträgers (2) erstreckt.

9. Hauptträger nach einem der vorhergehenden Ansprüche, **dadurch gekennzeichnet, dass** die Befestigung der Messerplatte (10), der Endplatte (12) und der Verstärkungsplatte (13) mittels Schweißung erfolgt.

10. Hauptträger nach einem der vorhergehenden Ansprüche, **dadurch gekennzeichnet, dass** im oberen Teil des zentralen Stegs (6) ein länglicher oberer Flansch (7) oder eine obere Platte angeordnet ist und im Bodenteil des zentralen Stegs (6) ein länglicher unterer Flansch (8) angeordnet ist.

11. Hauptträger nach Anspruch 10, **dadurch gekennzeichnet, dass** die Messerplatte (10) und der untere Flansch (8) im Wesentlichen gleich dick sind.

12. Hauptträger nach einem der vorhergehenden Ansprüche, **dadurch gekennzeichnet, dass** an beiden Enden des Hauptträgers (2) ein Schneideschlitz (9) und eine Messerplatte (10) angeordnet sind.

## Revendications

1. Poutre principale (2) d'un pont roulant, prévue pour être supportée par ses extrémités sur les poutres d'extrémité (3) du pont roulant (1) et qui comprend une âme centrale de type boîte allongée (6) ayant des tôles d'âme verticales (6A), **caractérisée en ce qu'**il y a, formée dans les tôles d'âme (6A) de l'âme verticale (6) sur au moins une extrémité de la poutre principale (2), une fente de coupe (9) s'étendant sensiblement dans la direction longitudinale de la poutre principale (2) et raccordée à cette fente de coupe (9), il y a une plaque de couteau (10) qui s'étend dans un plan horizontal à partir d'un fond (9a) de la fente de coupe (9) sensiblement jusqu'à l'extrémité de la poutre principale (2) pour le support sur la poutre d'extrémité (3).

2. Poutre principale selon la revendication 1, **caractérisée en ce que**, à partir de la surface d'extrémité de la poutre principale (2) sur une longueur spécifique, sur le côté inférieur de la plaque de couteau (10), une partie de l'âme centrale (6) a été coupée avec un profil latéral (P) d'une forme spécifique afin de former un espace (11) pour les conduits de ventilation, les étagères de câble, le rail d'alimentation du pont, etc.

3. Poutre principale selon la revendication 1 ou 2, **caractérisée en ce que** le côté inférieur de la plaque de couteau (10) est sensiblement dépourvu d'âme centrale (6) sur une longueur spécifique à partir d'une surface d'extrémité de la poutre principale (2), pour le support sur la poutre d'extrémité (2) .

4. Poutre principale selon la revendication 3, **caractérisée en ce qu'**une plaque de support (15) est fixée à la surface inférieure libre de la plaque de couteau (10), pour le support sur la poutre d'extrémité (3).

5. Poutre principale selon l'une quelconque des revendications précédentes, **caractérisée en ce qu'**une plaque d'extrémité (12) est fixée à la surface d'extrémité de la poutre principale (2) et à l'extrémité de la plaque de couteau (10).

6. Poutre principale selon la revendication 1 ou 2, **caractérisée en ce que**, fixée à la surface d'extrémité de la poutre principale (2) et à l'extrémité de la plaque de couteau (10), on fixe une plaque d'extrémité (12) à partir de laquelle l'extrémité de la poutre principale (2) est prévue pour être supportée sur la poutre d'extrémité (3).

7. Poutre principale selon l'une quelconque des revendications précédentes, **caractérisée en ce qu'**une plaque de renforcement de répartition de contrainte (13) est fixée des deux côtés de l'âme centrale (6) dans la zone sur le côté du fond (9a) de la fente de coupe (9), la plaque de renforcement s'étendant sur une zone spécifiée sur les côtés avant, arrière, supérieur et inférieur du fond (9a) de la fente de coupe (9).

8. Poutre principale selon l'une quelconque des revendications précédentes, **caractérisée en ce que**, formée sur la partie d'âme au-dessous de la plaque de couteau (10), il y a une saillie (14) en contact avec la surface inférieure de la plaque de couteau (10) et s'étend vers la surface d'extrémité de la poutre principale (2).

9. Poutre principale selon l'une quelconque des revendications précédentes, **caractérisée en ce que** les fixations de la plaque de couteau (10), de la plaque d'extrémité (12) et de la plaque de renforcement (13) sont réalisées par soudage.

10. Poutre principale selon l'une quelconque des revendications précédentes, **caractérisée en ce qu'**une bride supérieure allongée (7) ou une plaque supérieure est agencée dans la partie supérieure de l'âme centrale (6), et une bride inférieure allongée (8) est agencée dans la partie inférieure de l'âme centrale (6).

11. Poutre principale selon la revendication 10, **caractérisée en ce que** la plaque de couteau (10) et la bride inférieure (8) ont une épaisseur sensiblement identique.

12. Poutre principale selon l'une quelconque des revendications précédentes, **caractérisée en ce qu'**une fente de coupe (9) et une plaque de couteau (10) sont agencées aux deux extrémités de la poutre principale (2).
